# EUROPÄISCHE PATENTSCHRIFT

(11) **EP 1 480 749 B1**
(45) Veröffentlichungstag und Bekanntmachung des Hinweises auf die Patenterteilung: **24.10.2007**
(21) Anmeldenummer: 03742969.3
(22) Anmeldetag: 28.02.2003
(51) Int. Cl.: B01L 3/00, G01N 27/447

(54) **MIKROFLUIDSYSTEM**
MICROFLUID SYSTEM
SYSTEME MICROFLUIDIQUE

(30) Priorität: 28.02.2002 EP 02004685; 22.04.2002 DE 10217846; 21.08.2002 DE 10238266
(43) Veröffentlichungstag der Anmeldung: 01.12.2004
(73) Patentinhaber: ibidi GmbH, 80799 München (DE)
(72) Erfinder: KAHL, Johan-Valentin, 80636 München (DE)
(74) Vertreter: Grünecker, Kinkeldey, Stockmair & Schwanhäusser Anwaltssozietät
(86) Internationale Anmeldenummer: PCT/EP2003/002086
(87) Internationale Veröffentlichungsnummer: WO 2003/072251

(56) Entgegenhaltungen:
- WO-A-00/21659
- WO-A-01/30490
- WO-A-01/71331
- WO-A-02/30560
- WO-A-98/10122
- US-A- 5 890 745

## Beschreibung

### Beschreibung der Erfindung

Die Erfindung betrifft ein Mikrofluidsystem mit mindestens einem durchströmbaren Volumen und mindestens einer mit dem Volumen verbundenen Anschlußeinrichtung sowie eine Steckereinrichtung zur Verwendung in einem solchen Mikrofluidsystem.

Mikrofluidsysteme, auch mikrofluidische Systeme genannt, haben hohes Potential bei der Analyse und Diagnostik in biologischen und medizinischen Anwendungen. Außerdem können sie zur Synthese von chemischen und biologischen Produkten, z.B. als Durchflußreaktoren, verwendet werden.

Mikrofluidische Systeme zeichnen sich dadurch aus, dass in kleinen Strukturen sehr geringe Mengen von flüssigen Medien transportiert werden. Dabei variiert das Flüssigkeitsvolumen von 10 ml bis unter 1 nl. Ein klarer Trend in der Mikrofluidik geht dahin, dass einzelne Komponenten durch spezielle Verbindungen zu einem Gesamtsystem untereinander verbunden werden sollen. Neben der Verbindung von mikrofluidischen Komponenten untereinander spielt gerade der Anschluß an die makroskopische Welt eine wichtige Herausforderung dar. Durch die miniaturisierten Strukturdimensionen, die typischerweise zwischen Nanometern und Millimetern liegen, werden an die Verbindungen besondere Anforderungen gestellt.

Diese sind: einfaches Anschließen und Lösen der Verbindungen; hohe Stabilität gegen ungewolltes Lösen; hohe Dichtheit gegen Gas- und Flüssigkeitsaustausch; geringes Totvolumen im Verhältnis zum Volumen der mikrofluidischen Komponente; Verhinderung des eindringens von unerwünschter Luft bei Herstellung der Verbindung (Luftblasen); Gewährleistung der Sterilität. Die Verbindungen sollte darüber hinaus biokompatibel und eventuell durchsichtig sein, um z. B. nachprüfen zu können, ob das Medium die Struktur tatsächlich durchströmt. Die Lösung sollte parallelisierbar und in der Herstellung günstig sein.

Es existieren zahlreiche als mikrofluidische Systeme bezeichnete Apparaturen.

Aus der US 5170286 (WO 9215037) ist z.B. eine Beobachtungskammer für Mikroskopie in Verbindung mit einem angeschlossenen Flußsystem bekannt. Es handelt sich dabei um eine "Sandwich"-Konstruktion die im wesentlichen aus einer speziellen Halterung (,central chamber element') besteht, in die Mikroskopie-Deckgläschen eingelegt werden, welche durch Deckplatten (,cover plates') fixiert werden. Der Durchfluß muss in dieser Kammer durch Schlauchverbindungen zu einem nicht auf der Kammer aufgebrachten Reservoir erzeugt werden. Über die Anschlüsse, insbesondere ihre Eigenschaften wie Stabilität. Dichtigkeit, einfache Handhabung, Totvolumen etc. werden keine Aussagen gemacht. Es wird auch nicht beschrieben, wie dieses anhand der Anschlußgeometrie gewährleistet werden kann.

In der WO 97/38300 ist ein Mikrokanalsystem aus Acryl beschrieben, das der elektrophoretischen Auftrennung dient. Der Mikrokanal wird jedoch nicht zum Durchspülen von Flüssigkeiten verwendet. Über die Anschlußgeometrie im Zusammenhang mit den genannten Anforderungen wird ebenfalls nichts berichtet.

In der WO 90/05295 ist ebenfalls ein optisches Biosensorsystem mit Kanälen beschrieben. Mittels Ventilen und Pumpen wird die zu untersuchende Flüssigkeit geführt. Über spezielle Geometrien der Anschlüsse und besondere Ausführungen der Anschlüsse zur Lösung der genannten Probleme wird hier ebenfalls nichts berichtet.

In der DE 197 11 281 C1 ist ebenfalls eine Vorrichtung mit mikrofluidischen Komponenten beschrieben. Der Schwerpunkt dieser Patentschrift liegt bei der Anordnung und Integration der funktionellen Schichten in dem Träger. Über die Geometrie der Anschlüsse wird hier generell nichts berichtet.

Die US 5,890,745 A beschreibt eine mikrofluidische Kopplereinrichtung, die einen Wafer und ein Substrat aufweist, in denen Montierkanäle ausgebildet sind. Eine Kapillarenführung wird mit zwei Beinen in den Montierkanälen fest mit dem Wafer und dem Substrat verbunden. Mit der Kapillarenführung kann eine Kapillare in einen in dem Wafer vorgesehenen Kanal geführt werden. Die Kapillarenführung ist in Form einer Erhöhung mit gekrümmten Aussenflächen ausgebildet und weist in ihrem Inneren eine sich konisch verjüngenden Vertiefung auf.

Über Deckelsysteme, welche die Flußkammem abschließen und spezielle integrierte Komponenten enthalten, wird in den genannten Schriften nichts berichtet.

Aus dem Stand der Technik zu Mikrofluidsystemen ist daher nicht bekannt, wie die oben genannten gewünschten Eigenschaften von Verbindungen und Anschlüssen verwirklicht werden soll.

Bisher bestehende Anschlüsse zum Einfüllen von Gasen oder Flüssigkeiten, wie z.B. Schlauchklemmen, verhindern zwar effektiv das Austreten von Gasen und Flüssigkeiten, sind aber in miniaturisierter Form sehr unhandlich. Die genormten Anschlüsse, die aus der Medizintechnik bekannt sind (Din-Taschenbuch 227, Medizinische Ein-malartikel, Vertikale Normen Beuth Verlag 1999), weisen im allgemeinen im Verhältnis zum Gesamtvolumen ein viel zu hohes Totvolumen auf. Dadurch ist besonders der Umgang mit kleinen Probenmengen nicht möglich. Auch sind die dort gezeigten Steckverbindungen nicht für die Verwendung mit mikrofluidischen Komponenten wie z.B. planaren Flußkammern vorgesehen oder optimiert. Das Verwenden von Schraubverschlüssen widerspricht bei vielen Anwendungen der Anforderung, schnell eine Flüssigkeit in einen Kanal einfüllen zu können. Diese können und werden jedoch zum festen Verschließen von z.B. Flußkammern verwendet. Auch eignen sich geklebte Verbindungen nicht für einmalverwendbare Analysechips.

Es ist die Aufgabe der Erfindung, die genannten Nachteile zu überwinden und ein Mikrofluidsystem und eine Steckereinrichtung bereitzustellen, durch die in schneller und einfacher Weise ein Durchfluß und Austausch von geringen Flüssigkeitsmengen und/oder ein Abschluß von kleinen Flüssigkeitsvolumina ermöglicht wird.

Diese Aufgabe wird gelöst durch ein Mikrofluidsystem gemäß Anspruch 1 und eine Steckereinrichtung gemäß Anspruch 11.

Dabei handelt es sich um ein Mikrofluidsystem mit mindestens einem durchströmbaren Volumen und mindestens einer mit dem Volumen verbundenen Anschlußeinrichtung. Durch die spezielle Geometrie der Anschlußeinrichtung kann gewährleistet werden, daß eine Steckereinrichtung schnell, einfach und insbesondere flüssigkeitsdicht an das Mikrofluidsystem angeschlossen werden kann. Außerdem kann durch diese Geometrie das Totvolumen verringert werden.

Ein weiterer Vorteil der hier beschriebenen Mikrofluidsysteme besteht darin, dass das Mikrofluidsystem selbst sehr dünn in Form eines herkömmlichen Objektträgers ausgebildet werden kann (z.B. 1-1.5mm dick), während für die benötigten Zusatzeinrichtungen, bspw. für die Flüssigkeitszufuhr, externe Komponenten verwendet werden können, die an- und wieder abmontiert werden können.

Die Anschlußeinrichtung verjüngt sich konisch. Damit kann ein fester Anschluß von Steckereinrichtungen ermöglicht werden. Insbesondere können Steckereinrichtungen mit unterschiedlichen Formen und Abmessungen verwendet werden, die je nach Form und/oder Abmessung unterschiedlich weit in oder auf die Anschlußeinrichtung gesteckt werden können.

Es ist von Vorteil, wenn die Anschlußeinrichtung durch ihre Form und/oder Abmessungen an üblicherweise verwendete Laborkomponenten angepasst ist. Beispielsweise kann die sich verjüngende Vertiefung an Standardpipettengrößen und -formen angepasst sein. Bei einer abschnittsweise konischen Vertiefung besteht die Vertiefung gewissermaßen aus aufeinanderfolgenden Kegelstümpfen mit unterschiedlichen, vorzugsweise sich nach unten verringernden, Öffnungswinkeln. Dadurch können verschiedene Pipetten mit unterschiedlichen Neigungs- bzw. Öffnungswinkeln fest mit der Anschlußeinrichtung verbunden werden. Auf diese Weise kann auch das Totvolumen weiter verringert werden. Wegen der speziellen Form der Vertiefung können dünne Pipettenspitzen mit wenig Flüssigkeitsvolumen tiefer in die Anschlußeinrichtung gesteckt werden als große Pipettenspitzen. Das Flüssigkeits- bzw. Luftvolumen zwischen der Pipettenspitze und dem durchströmbaren Volumen wird somit minimiert. Daher können verschieden große Pipettenspitzen für dieselbe Anschlußeinrichtung verwendet werden, wobei alle Pipettenspitzen dicht mit der Anschlußeinrichtung abschließen.

Bei einer hyperbolischen Vertiefung können Flüssigkeiten mit Hilfe einer Pipette in das durchströmbare Volumen gedrückt werden; alternativ fließen die Flüssigkeiten beim Abziehen der Pipette aufgrund der Kapillar- und/oder Gravitationskraft in das Volumen.

Eine Anschlußeinrichtung in Form einer sich verjüngenden Erhöhung kann so ausgebildet sein, dass sie an Injektionsflaschenstopfen und/oder Deckelflaschenstopfen angepasst ist. Das Material der Injektionsflaschenstopfen kann beispielsweise Gummi oder Chlorbutyl umfassen.

Erfindungsgemäß weist das Mikrofluidsystem eine strukturierte Oberfläche in Form von sich konisch verjüngenden Erhöhungen auf. Die Anschlußeinrichtungen sind in diesen Erhöhungen in Form einer sich konisch verjüngenden Vertiefung ausgebildet. Die innere und äußere Form und Abmessung einer solchen Erhöhung mit einer darin ausgebildeten Anschlußeinrichtung können an üblicherweise verwendete Laborkomponenten angepaßt sein. Damit kann erreicht werden, daß durch die sich verjüngende Erhöhung einerseits eine Steckereinrichtung in schneller, einfacher und stabiler Weise aufgesteckt werden kann; gleichzeitig kann andererseits durch die angepasste Vertiefung eine feste und dichte Verbindung für den Durchfluß von Flüssigkeiten erreicht werden.

Gemäß einer vorteilhaften Weiterbildung aller zuvor beschriebenen Mikrofluidsysteme weist die Anschlußeinrichtung einen Absatz auf. Dadurch kann eine Steckereinrichtung nur bis zu dem Absatz auf oder in die Anschlußeinrichtung gesteckt werden. Insbesondere bei einer Anschlußeinrichtung in Form einer Vertiefung kann somit verhindert werden, daß eine Steckereinrichtung durch zu tiefes Hineinstecken das durchströmbare Volumen verstopft. Ein solcher Absatz muß dabei nicht um den ganzen Innen- oder Außenumfang der Anschlußeinrichtung herumlaufen, er kann beispielsweise in Form eines Halbringes ausgebildet sein.

Vorzugsweise weist die Anschlußeinrichtung der bisher beschriebenen Mikrofluidsysteme eine Aussparung zur Aufnahme eines Einrastelements auf. Somit kann eine Steckereinrichtung mit einem Einrastelement fest mit der Anschlußeinrichtung verbunden und schnell wieder gelöst werden. Die Aussparung kann um die gesamte Anschlußeinrichtung herumlaufen oder auch nur an einzelnen Stellen ausgebildet sein.

Vorzugsweise ist die Anschlußeinrichtung aller zuvor beschriebenen Mikrofluidsysteme als Anschlußeinrichtung zur Aufnahme eines Luer-Lock-Element ausgebildet.

Ist es nicht erforderlich, die Steckereinrichtung schnell mit der Anschlußeinrichtung zu verbinden und von ihr zu lösen, kann die Anschlußeinrichtung ein Gewinde aufweisen. Damit kann eine besonders feste und stabile Verbindung zwischen einer Steckereinrichtung und der Anschlußeinrichtung erzielt werden.

Gemäß einer vorteilhaften Weiterbildung aller zuvor beschriebenen Mikrofluidsysteme ist an der Anschlußeinrichtung ein Verschlußelement zur Verschließen der Anschlußeinrichtung angeordnet. Somit kann beispielsweise ein Eindringen von Verunreinigungen, falls die Anschlußeinrichtung nicht, zum Beispiel an einen Stecker, angeschlossen ist, verhindert werden. Eine solches Verschlußelement kann entweder derart ausgebildet sein, daß es auf reversible Weise geöffnet werden kann oder daß es nur auf irreversible Weise geöffnet werden kann. Das Verschlußelement kann beispielsweise als Folie oder Membran ausgebildet sein. Ein solches Verschlußelement kann dann irreversibel geöffnet werden, indem es durch Beaufschlagung mit Druck, durch einen Stecker, durch eine Pipette, durch Flüssigkeit, oder ähnliches, perforiert wird. Für eine reversible Öffnungsmöglichkeit kann das Verschlußelement beweglich angeordnet sein, so daß es beispielsweise bei Beaufschlagung mit Druck aus einer die Anschlußeinrichtung verschließenden Stellung in eine Stellung bewegt wird, in der die Anschlußeinrichtung geöffnet ist. Nach Beendigung dieser Druckbeaufschlagung kann das Verschlußelement wieder in die verschließende Stellung zurückkehren.

Ein bevorzugtes Verschlußelement kann eine funktionalisierte oder behandelte Oberfläche aufweisen. Die Oberfläche kann beispielsweise hydrophob sein.

In einer bevorzugten Weiterbildung aller zuvor beschriebenen Mikrofluidsysteme ist in dem Mikrofluidsystem mindestens ein weiteres durchströmbares Volumen ausgebildet, welches oberhalb des mindestens einen durchströmbaren Volumens in die Anschlußeinrichtung mündet. Auf diese Weise kann erreicht werden, daß durch einen Stecker, der an der Anschlußeinrichtung angeordnet wird, der wenigstens eine Kanal verschlossen wird.

Es ist von Vorteil, wenn die Anschlußeinrichtung aller oben beschriebenen Mikrofluidsysteme ein optisch transparentes Material umfasst. Dadurch kann auf optischem Wege beispielsweise überprüft werden, ob eine Flüssigkeit die Anschlußeinrichtung und/oder das Volumen durchströmt, ob sich Gasblasen bilden und/oder ob eine optimale Verbindung zwischen der Anschlußeinrichtung und einer Steckereinrichtung besteht.

Vorzugsweise umfassen die oben beschriebenen Mikrofluidsysteme mehrere Anschlußeinrichtungen, die mit einem oder mehreren durchströmbaren Volumina verbunden sind. Insbesondere können die Anschlußeinrichtungen derart angeordnet sein, dass mehrere Anschlußeinrichtungen gemeinsam mit einer Steckervorrichtung verbunden werden können.

Vorteilhafterweise umfasst das Material aller oben beschriebenen Mikrofluidsysteme ein optisch hochwertiges Glas oder einen optisch hochwertigen Kunststoff, d. h. der Kunststoff weist keine Doppelbrechung und/oder Autofluoreszenz auf. Hierfür können beispielsweise cyclische Olefine und Polycarbonat verwendet werden. Ferner kann der Boden und/oder die Decke des durchströmbaren Volumens, entsprechend den Erfordernissen der verwendeten Untersuchungsmethode, eine Dicke aufweisen, die geringer als 190 µm ist. Dadurch werden optimale Eigenschaften für eine Vielzahl von Untersuchungsverfahren erreicht.

Für bestimmte Untersuchungsmethoden, wie z. B. Wechselwirkungsuntersuchungen zwischen Molekülen, ist es wünschenswert, die Moleküle, Makromoleküle oder Zellen zu immobilisieren. Hierfür kann eine innere Oberfläche des durchströmbaren Volumens und/oder der Anschlußeinrichtung oberflächenbehandelt oder funktionalisiert sein, wie beispielsweise durch Molekülgruppen, Gruppen (z.B.-COOH, -NH2, Ketone, Alkohole) oder Makromolekülen wie DNA oder Proteinen. Die auf dieser Oberfläche immobilisierten Proben können bei Reaktion mit einem in Lösung befindlichen Stoff (z. B. Molekül) eine charakteristische Änderung ihres Spektrums aufweisen oder ein charakteristisches Fluoreszenzsignal aussenden. Mit Hilfe des Mikrofluidsystems ist es möglich, die in Lösung befindlichen Moleküle herauszuspülen, so dass dieses Signal störungsarm quantitativ analysiert werden kann. Im Bereich der Anschlußeinrichtung kann die innere Oberfläche des Mikrofluidsystems oberflächenbehandelt oder beschichtet sein. Dadurch kann bspw. erreicht werden, dass die innere Oberfläche in diesem Bereich hydrophob ist. Auf diese Weise kann eine Flüssigkeit von der Anschlußeinrichtung weg in das durchströmbare Volumen geleitet werden, wodurch beispielsweise Verunreinigungen, die von außen durch die Anschlußeinrichtung eindringen, von der Flüssigkeit ferngehalten werden können.

Die beschriebenen Mikrofluidsystem können vorzugsweise aus einem Stück bestehen. Es gibt somit keine Elemente die vor der Benutzung gereinigt werden müssen, und es kann mit geringen Aufwand steril gehalten werden. Es muss auch vor der Benutzung nicht aufwendig zusammengefügt werden. In diesem Fall ist es normaterweise auch nur zur einmaligen Benutzung vorgesehen.

Erfindungsgemäß wird auch eine Steckereinrichtung zur Verwendung in einem der oben beschriebenen Mikrofluidsysteme bereitgestellt, wobei die Steckereinrichtung derart ausgebildet ist, dass sie in Eingriff mit der Anschlußeinrichtung bringbar ist.

Insbesondere kann dies bedeuten, dass die Steckereinrichtung derart ausgebildet ist, dass eine feste, insbesondere flüssigkeitsdichte, Verbindung zwischen der Stecker-8 einrichtung und der Anschlußeinrichtung gebildet werden kann. Dazu weist die Steckereinrichtung ein sich in Steckrichtung konisch verjüngendes und ein sich gegen die Steckrichtung konisch verjüngendes Teilelement auf. Somit kann kann die Verbindung zwischen Steckereinrichtung und Anschlußeinrichtung ein geringes Totvolumen aufweisen.

Gemäß einer bevorzugten Weiterbildung aller zuvor beschriebenen Steckereinrichtungen ist diese derart ausgebildet, dass sie wenigstens teilweise flächig an der Anschlußeinrichtung anliegt. Dadurch kann eine besonders feste und stabile Verbindung mit der Anschlußeinrichtung erreicht werden.

Vorteilhafterweise können die beschriebenen Steckereinrichtungen derart ausgebildet sein, dass sie gasdurchlässig in Eingriff mit der Anschlußeinrichtung bringbar sind. Dies kann dadurch erreicht werden, dass zumindest teilweise ein Abstand, bspw. mittels Abstandhalter, zwischen Steckereinrichtung und Anschlußeinrichtung ausgebildet wird. Steckereinrichtung und Anschlußeinrichtung können so aufeinander abgestimmt sein, dass die Steckereinrichtung durch festes Andrücken gasundurchlässig in Eingriff bringbar ist. Dies kann beispielsweise durch Abstandhalter aus elastischem Kunststoff in Form von Ausbuchtungen erzielt werden.

Gemäß einer vorteilhaften Weiterbildung aller zuvor beschriebenen Steckereinrichtungen umfassen diese mindestens ein Einrastelement in Form einer Ausbuchtung. Dadurch kann die Steckereinrichtung schnell mit einer entsprechenden Anschlußeinrichtung in Eingriff gebracht werden und außerdem eine feste Verbindung bilden. Die Steckereinrichtungen können dann zusätzlich derart ausgebildet sein, dass sich die Einrastelemente wieder leicht ausrasten lassen, um so die Verbindung zwischen Anschlußeinrichtung und Steckereinrichtung zu lösen. Dazu können weitere Ausbuchtungen derart ausgebildet sein, dass durch Beaufschlagung mit Druck ein Drehmoment entsteht, wodurch sich die Einrastelemente ausrasten lassen. Alle beschriebenen Ausbuchtungen können um die Steckereinrichtung herumlaufen oder nur an einzelnen Stellen ausgebildet sein. Die Einrastelemente können bspw. in Form von Widerhaken ausgebildet sein.

Gemäß einer vorteilhaften Alternative weist die Steckereinrichtung ein Gewinde auf. Damit kann ein festes Verbinden von Steckereinrichtung und Anschlußeinrichtung ermöglicht werden.

Gemäß einer weiteren vorteilhaften Alternative kann die Steckereinrichtung nach Art eines Kronkorkens mit der Anschlußeinrichtung verbunden werden. Dabei wird die Steckereinrichtung auf die Anschlußeinrichtung gepresst. Dadurch kann eine höhere Sterilität gewährleistet werden.

Vorzugsweise kann jede beschriebene Steckereinrichtung derart ausgebildet sein, dass sie an einem Teil der die Aufnahmeeinrichtung umgebenden Oberfläche des Mikrofluidsystems flächig anliegt. Dadurch kann eine stabile Verbindung zwischen Steckereinrichtung und Anschlußeinrichtung gewährleistet werden.

Gemäß einer bevorzugten Weiterbildung umfasst jede der zuvor beschriebenen Steckereinrichtungen ein optisch transparentes Material. Dadurch kann bspw. der Fluß durch die Steckereinrichtung und/oder das Volumen, das Vorhandensein von Luftblasen und/oder die Verbindung zwischen Steckereinrichtung und Anschlußeinrichtung optisch überprüft werden.

Es ist von Vorteil, wenn die zuvor beschriebenen Steckereinrichtungen ein biokompatibles Material umfassen. Damit können unerwünschte Wechselwirkungen zwischen Flüssigkeit und Material vermieden werden. Die Steckereinrichtungen können beispielsweise ganz oder teilweise aus biokompatiblem Material bestehen oder mit einem biokompatiblen Material ganz oder teilweise beschichtet sein.

Gemäß einer vorteilhaften Weiterbildung aller zuvor beschriebenen Steckereinrichtungen umfassen diese mindestens ein Durchgangsloch. Mit einem Durchgangsloch kann die Zuführung von Flüssigkeit und oder Gasen ermöglicht werden.

Vorzugsweise wird jedes Durchgangsloch mit einer Zuführeinrichtung, insbesondere einem Schlauch, verbunden. Jede Zuführeinrichtung kann beispielsweise mit einer Flüssigkeits- oder Gasquelle verbunden sein.

Gemäß einer vorteilhaften Alternative ist jedes Durchgangsloch derart ausgebildet, daß es an die Form üblicherweise verwendeter Laborkomponenten (z. B. Pipette) angepasst ist.

Vorteilhafterweise kann jedes Durchgangsloch mit einem Septum verschlossen werden. Die Septen können beispielsweise Silikon, Teflon, Naturkautschuk, Gummi, Styrol-Butadien-Gummi oder Butyl umfassen. Das Material der Steckereinrichtung kann Kunststoff oder Aluminium umfassen.

Vorzugsweise umfassen die beschriebenen Durchgangslöcher Mikrofilter.

Gemäß einer vorteilhaften Weiterbildung der beschriebenen Steckereinrichtungen umfassen diese Verschlußelemente. Gemäß einer vorteilhaften Alternative ist die Steckereinrichtung insgesamt als Verschlußeinrichtung ausgebildet. Gemäß einer weiteren vorteilhaften Alternative ist das Verschlußelement wie bei der zuvor beschriebenen Steckereinrichtung ausgebildet. Insbesondere kann das Verschlußelement als Folie oder Membran ausgebildet sein, die vor Verwendung der Steckereinrichtung entfernt wird..

Es ist von Vorteil, wenn die zuvor beschriebenen Steckereinrichtung elektronische Komponenten, Flüssigkeitsreservoire und/oder Gasreservoire umfassen. Beispielsweise kann die Steckereinrichtung Elektroden umfassen, die derart ausgebildet sind, dass sie in das durchströmbare Volumen reichen, wodurch in der Flüssigkeit eine elektrische Spannung angelegt werden kann. Sie können auch gleichzeitig in ein in die Steckereinrichtung integriertes Flüssigkeitsreservoir reichen und somit eine leitende Verbindung zwischen dem Flüssigkeitsreservoir und dem durchströmbaren Volumen bilden. Die elektronischen Komponenten können zusätzlich als Steuereinrichtungen ausgebildet sein und die Zugabe von Flüssigkeit und/oder Gas in das durchströmbare Volumen steuern. Alternativ kann diese Zugabe auch über externe Anschlüsse gesteuert werden. Die Steuerung kann sich bspw. auf die Menge und/oder Zeitdauer beziehen; die Zugabe kann mittels Druckluft erfolgen. Ein weiterer Vorteil dieser Weiterbildung besteht darin, dass durch die unmittelbare Nähe des Flüssigkeits- oder Gasreservoirs zum durchströmbaren Volumen die benötigte Menge an Flüssigkeit oder Gas stark reduziert werden kann. Vorteilhafterweise können die integrierten Flüssigkeitsreservoire ein Druchgangsloch umfassen, das oberhalb der Grundfläche in das Flüssigkeitsreservoir mündet. Fließt somit eine Flüssigkeit aus dem durchströmbaren Volumen durch das Durchgangsloch in das Flüssigkeitsreservoir, wird ein Rückfließen verhindert.

Durch die Erfindung wird auch eine Steckervorrichtung aus mindestens zwei Steckereinrichtungen bereitgestellt, wobei die Steckereinrichtungen als Einheit ausgebildet sind. Eine solche Steckervorrichtung kann mit mehreren Anschlußeinrichtungen gleichzeitig in Eingriff gebracht werden.

Falls die Steckervorrichtung wenigstens zwei Flüssigkeitsreservoire umfasst, können diese vorteilhafterweise über eine Durchgangsöffnung miteinander verbunden sein. In dieser Druchgangsöffnung können bspw. Mikrofilter angeordnet sein.

Bei Anschlußeinrichtungen in Form sich verjüngender Vertiefungen können die Steckervorrichtung und die Anschlußeinrichtungen ebenfalls derart ausgebildet sein, dass die Steckervorrichtung, nachdem sie mit den Anschlußeinrichtungen in Eingriff gebracht wurde, nicht über die Oberfläche des Mikrofluidsystems ragt.

Durch die Steckervorrichtung wird ein aufsteckbares Modul bereitgestellt, das bspw. einen Reaktions-, Sammel- und/oder Aufreinigungsbereich umfassen kann.

Durch die Erfindung wird außerdem ein System bereitgestellt, das mindestens eines der zuvor beschriebenen Mikrofluidsysteme und mindestens eine der zuvor beschriebenen Steckereinrichtungen und/oder -vorrichtungen umfasst.

Die Erfindung stellt außerdem ein Mikrofluidsystem mit mindestens einem durchströmbaren Volumen bereit, in welchem jedes durchströmbare Volumen in ein Flüssigkeitsreservoir mündet und die Mündung jedes Volumens oberhalb der Grundfläche des entsprechenden Flüssigkeitsreservoirs angeordnet ist. Das Mikrofluidsystem kann insbesondere eines der oben beschriebenen Mikrofluidsysteme sein.

Mit einem solchen Mikrofluidsystem wird in vorteilhafter Weise erreicht, dass eine Flüssigkeit, die durch das durchströmbare Volumen in das Flüssigkeitsreservoir fließt, von dem Flüssigkeitsreservoir aufgenommen wird und nicht mehr in das durchströmbare Volume zurückfließt. Somit kann beispielsweise das Volumen mit verschiedenen Flüssigkeiten direkt hintereinander durchspült werden, die dann jeweils von dem Flüssigkeitsreservoir aufgenommen werden, so daß sich die Flüssigkeiten in dem Volumen nicht vermischen.

Gemäß einer vorteilhaften Weiterbildung dieses Mikrofluidsystems kann jedes Flüssigkeitsreservoir auf der Oberfläche des Mikrofluidsystems angeordnet sein. Auf diese Weise ist jedes Reservoir einfach und schnell von außen zugänglich, was beispielsweise die Flüssigkeitsentnahme aus dem Reservoir erleichtert. Jedes Reservoir kann abgedeckt sein.

Vorzugsweise kann jedes durchströmbare Volumen durch einen Hohlzylinder geführt werden, der innerhalb des entsprechenden Flüssigkeitsreservoirs auf der Grundfläche des Flüssigkeitsreservoirs stehend ausgebildet ist. Somit wird das durchströmbare Volumen durch die Grundfläche des Flüssigkeitsreservoirs geführt. Der Querschnitt des Hohlzylinders kann beliebig ausgebildet sein, es kann sich beispielsweise um einen Hohlzylinder mit einem kreisförmigen Querschnitt innen und außen handeln. Auf diese Weise kann das Mikrofluidsystem einfach hergestellt werden. Jeder Hohlzylinder kann direkt entlang einer Seitenfläche des Flüssigkeitsreservoirs angeordnet sein und in die Seitenwand übergehen oder davon entfernt angeordnet sein.

Gemäß einer vorteilhaften Alternative weist das Flüssigkeitsreservoir eine Seitenwand auf, in die das durchströmbare Volumen teilweise integriert ist. Die Mündung des Volumens befindet sich demnach in der Seitenwand oberhalb der Grundfläche des Reservoirs.

Jedes durchströmbare Volumen kann statt durch einen Hohlzylinder auch durch einen anderen Hohlkörper innerhalb des Flüssigkeitsreservoirs geführt werden. Ein solcher Hohlkörper kann sich beispielsweise in einer Richtung verjüngen.

Wenn jedes durchströmbare Volumen innerhalb des Flüssigkeitsreservoirs als Hohlzylinder ausgebildet ist, kann der Hohlzylinder eine abgeschrägte Oberfläche aufweisen. Damit wird verhindert, dass die austretende Flüssigkeit nach oben spritzt; sie fließt statt dessen zur Seite.

Vorzugsweise kann das Material des Mikrofluidsystems einen Kunststoff umfassen, wie Polycarbonat oder Polyolefine, wodurch eine einfache Herstellung mittels Spritzgußverfahren oder Extrudieren möglich ist.

Weitere Merkmale der Erfindung werden anhand der Ausführungsbeispiele in den Zeichnungen beschrieben. Dabei zeigen in schematischer Form:
Fig. 1 einen Querschnitt durch ein Mikrofluidsystem und eine Steckereinrichtung in Form einer Vertiefung,
Fig. 2 einen Querschnitt durch ein Mikrofluidsystem mit einer auf eine Pipettenspitze angepassten Anschlußeinrichtung,
Fig. 3 in dreidimensionaler Ansicht den Verlauf einer Anschlußeinrichtung in Form einer Vertiefung mit einer abschnittsweise konischen Verjüngung,
Fig. 4 in dreidimensionaler Ansicht den Verlauf einer Anschlußeinrichtung in Form einer Vertiefung mit einer hyperbolischen Verjüngung,
Fig. 5 in dreidimensionaler und Querschnittsansicht eine Darstellung einer Anschlußeinrichtung mit einem Absatz,
Fig. 6 einen Querschnitt durch eine Anschlußeinrichtung in Form einer konischen Erhöhung und mit einer Steckereinrichtung mit und ohne Einrastelement,
Fig. 7 einen Querschnitt durch ein Mikrofluidsystem mit einer strukturierten Oberfläche und eine Anschlußeinrichtung in Form einer konischen Vertiefung,
Fig. 8 einen Querschnitt durch ein Mikrofluidsystem mit einer strukturierten Oberfläche und eine Steckereinrichtung mit einem Einrastelement,
Fig. 9a eine perspektivische Ansicht einer Steckervorrichtung,
Fig. 9b eine perspektivische Ansicht eines Mikrofluidsystems mit einer Anschlußvorrichtung,
Fig. 9c einen Querschnitt durch ein System aus einer Steckervorrichtung und einem Mikrofluidsystem mit einer Anschlußvorrichtung,
Fig. 10a einen Querschnitt durch ein Mikrofluidsystem und eine Steckereinrichtung mit Ausbuchtungen zum Lösen der Steckereinrichtung,
Fig. 10b einen Querschnitt durch ein Mikrofluidsystem und eine Steckereinrichtung mit ausgerasteten Einrastelementen,
Fig. 11 einen Querschnitt durch ein Mikrofluidsystem mit einem durchströmbaren Volumen und einem Flüssigkeitsreservoir,
Fig. 12 einen Querschnitt durch ein Mikrofluidsystem und eine Steckereinrichtung mit einem Flüssigkeitsreservoir,
Fig. 13 einen Querschnitt durch ein Mikrofluidsystem und eine Steckereinrichtung mit einem Durchgangsloch für eine Pipette,
Fig. 14a und 14b einen Querschnitt eines weiteren Beispiels für ein Mikrofluidsystem und eine Steckereinrichtung mit einem Flüssigkeitsreservoir,
Fig. 15a und 15b einen Querschnitt eines weiteren Beispiels für ein Mikrofluidsystem und eine Steckereinrichtung mit einem Flüssigkeitsreservoir,
Fig. 16a und 16b einen Querschnitt eines Mikrofluidsystems und einer Steckereinrichtung mit einem Verschlußelement,
Fig. 17a und 17b einen Querschnitt durch ein Mikrofluidsystem mit einem durchströmbaren Volumen, das durch eine Steckereinrichtung verschlossen wird,
Fig. 18a und 18b einen Querschnitt durch ein Mikrofluidsystem mit einem Verschlußelement,
Fig. 19 einen Querschnitt durch ein Mikrofluidsystem mit einem beschichteten Bereich,
Fig. 20a, 20b und 20c einen Querschnitt durch ein weiteres Mikrofluidsystem mit einem Verschlußelement,
Fig. 21 aund 21 b eine Variante des Mikrofluidsystems von Fig. 19a und 19b,
Fig. 22a, 22b, 22c und 22d einen Querschnitt durch ein weiteres Mikrofluidsystem mit einem Verschlußelement,
Fig. 23a und 23b einen Querschnitt durch ein weiteres Mikrofluidsystem mit einem Verschlußelement,
Fig. 24 einen Querschnitt durch ein Mikrofluidsystem mit einer Steckervorrichtung,
Fig. 25a und 25b einen Querschnitt durch ein Mikrofluidsystem mit Verschlußelementen und mit einer Steckervorrichtung, und
Fig. 26a und 26b eine Explosionsansicht eines Mikrofluidsystems mit einem Verschlußelement

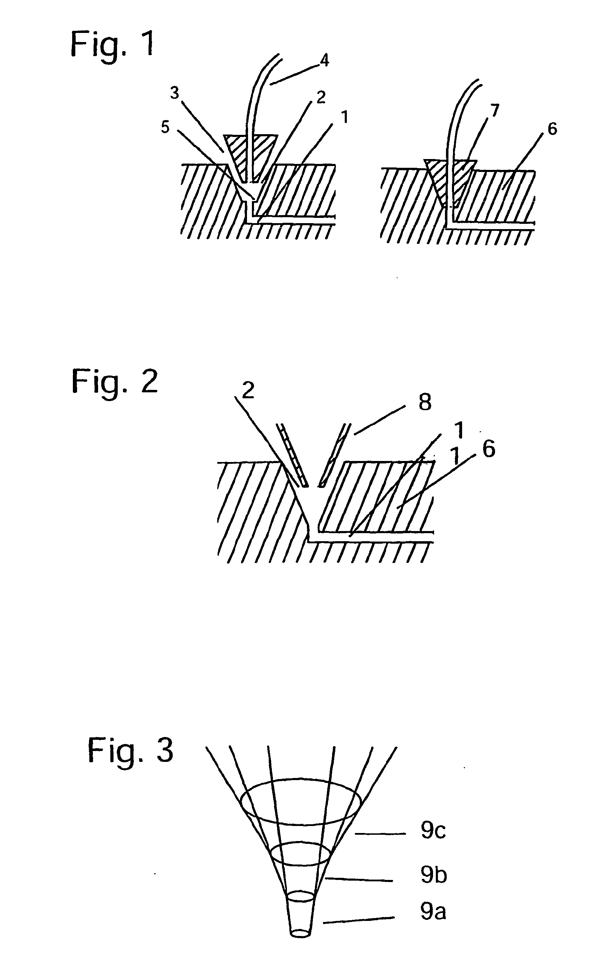

Fig. 1 zeigt den Querschnitt eines Mikrofluidsystems 6 und einer Steckereinrichtung 7. In dem Mikrofluidsystem 6 befindet sich ein durchströmbares Volumen 1 in Verbindung mit der Anschlußeinrichtung in Form einer Vertiefung mit konischer Verjüngung 2 und einem Absatz 5 zur Vermeidung von Totvolumen. Die Steckereinrichtung ist ebenfalls in Form einer konischen Verjüngung 3 in Steckrichtung ausgebildet. Die Steckereinrichtung umfasst ein Durchgangsloch, mit dem ein Schlauch 4 verbunden ist.

In Fig. 2 wird der Querschnitt einer Anschlußeinrichtung gezeigt, welche für eine Pipettenspitze 8 optimiert ist. In das Volumen 2 des Mikrofluidsystems 6 mit der konischen Anschrägung 2 kann somit mit einer Pipette Flüssigkeit ohne Totvolumen eingefüllt werden. Für handelsübliche Pipetten kann der kleinste (untere) Innendurchmesser zwischen 0.4 mm und 1 mm liegen, der größte (obere) Innendurchmesser zwischen 0.7 mm und 6 mm und die Tiefe der Vertiefung zwischen 1 mm und 15 mm liegen.

Fig. 3 zeigt den Verlauf einer Anschlußeinrichtung in Form einer Vertiefung mit abschnittsweise konischer Verjüngung 9a, 9b und 9c, bei der sich die Öffnungswinkel der Kegelstümpfe nach unten verringem, in einer dreidimensionalen Darstellung. Dadurch können verschieden Pipettenspitzen verwendet werden, ohne das ein nennenswertes Totvolumen entsteht.

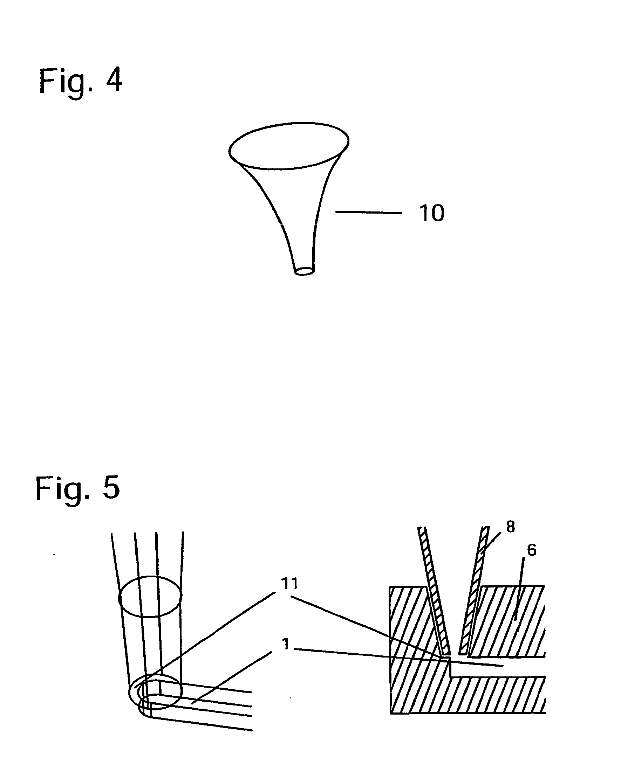

Fig. 4 zeigt den Verlauf einer Anschlußeinrichtung in Form einer Vertiefung mit hyperbolischer Verjüngung 10.

Fig. 5 zeigt in dreidimensionaler und Querschnittsansicht ein Beispiel eines Mikrofluidsystems 6 mit einer Anschlußeinrichtung mit einem Absatz 11. Dadurch ist gewährleistet, dass die in der Pipettenspitze 8 befindliche Flüssigkeit auch bei festem Aufsetzen der Pipettenspitze in das durchströmbare Volumen 1 gelangen kann. Hier ist der Absatz in Form eines Halbringes ausgebildet.

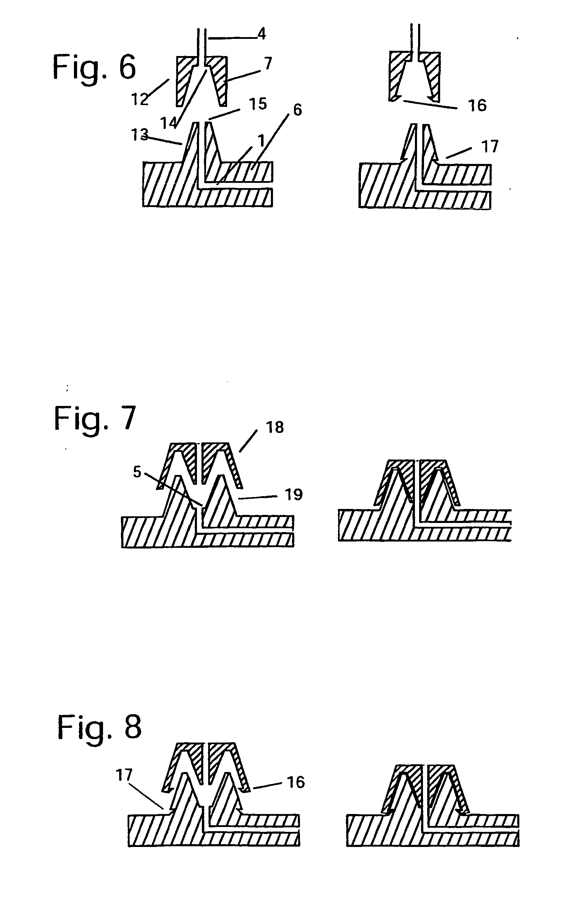

In Fig. 6 sind zwei Beispiele einer Anschlußeinrichtung in Form einer sich konisch verjüngenden Erhöhung 13 zu sehen. Die an die Anschlußeinrichtung angepaßte Steckereinrichtung 7 weist innen eine konische Verjüngung gegen die Steckrichtung auf. Die Außenfläche 12 ist zylindrisch. Zur Vermeidung von Totvolumens sind an der Steckereinrichtung und an der Anschlußeinrichtung Absätze 14 und 15 ausgebildet. Im Gegensatz zu dem Beispiel auf der linken Seite, weist das Beispiel auf der rechten Seite Einrastelemente 16 in Form von Widerhaken und entsprechende Aussparungen 17 auf. Damit kann die Steckereinrichtung besonders fest und dicht mit der Anschlußeinrichtung verbunden werden.

Die Anschlußeinrichtung kann beispielsweise in Form einer konischen Erhöhung ausgebildet sein, bei der der Öffnungswinkel des Kegelstumpfes 6° beträgt und der kleinste (obere) Durchmesser zwischen 3.5 mm und 4.5 mm liegt. Die Höhe der Erhöhung kann zwischen 6 mm und 9 mm variieren. Damit können die aus der Medizin bekannten Luer-Stecker in vorteilhafter Weise fest mit dem Mikrofluidsystem verbunden werden.

Fig. 7 zeigt ein Ausführungsbeispiel eines Mikrofluidsystems mit einer strukturierten Oberfläche in Form einer konischen Erhöhung 19. Die Anschlußeinrichtung ist in Form einer sich konisch verjüngenden Vertiefung ausgebildet. Dadurch können sowohl die äußeren als auch die inneren Abmessungen an die Abmessungen üblicher Laborkomponenten angepasst werden. So können beispielsweise sowohl Standardstecker, Pipettenspitzen als auch spezielle Stecker verwendet werden. In dem gezeigten Beispiel ist die Steckereinrichtung derart ausgebildet, dass sie einen Teil der die Anschlußeinrichtung umgebenden Oberfläche überdeckt, wodurch die Stabilität erhöht wird. Wie in Fig.1 ist auch hier ein Absatz 5 zum Vermeiden von Totvolumen dargestellt. Rechts wird die Anschlußeinrichtung und das Mikrofluidsystem im verbundenem Zustand gezeigt.

Fig. 8 zeigt einen ähnliches Mikrofluidsystem mit Steckereinrichtung wie Fig. 7; allerdings sind an der Steckereinrichtung Widerhaken 16 und an der Anschlußeinrichtung Aussparungen 17 angebracht, die es erlauben, die Steckereinrichtung besonders fest und dicht auf die Anschlußeinrichtung aufzusetzen.

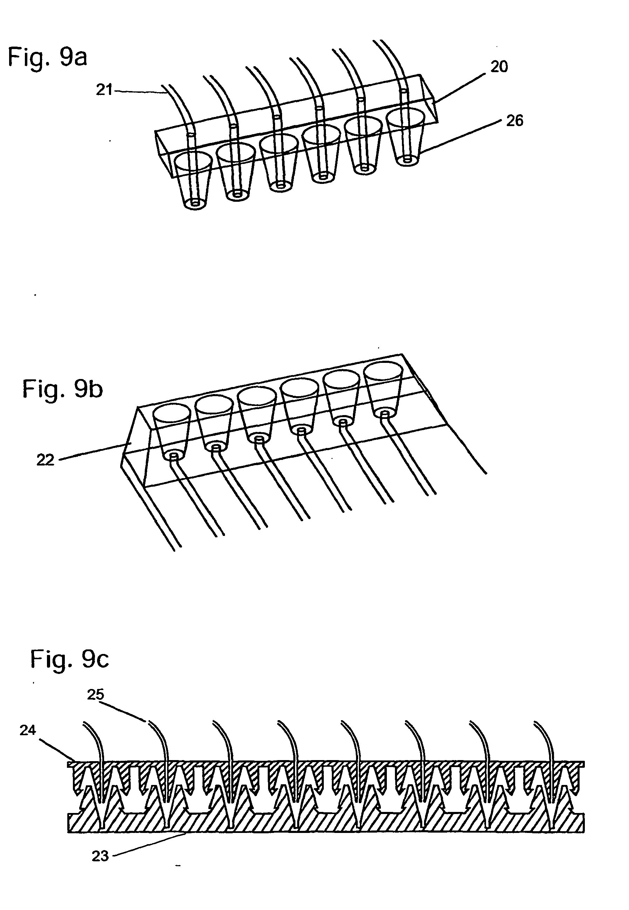

Fig. 9a zeigt eine Steckervorrichtung, bei der mehrere Stecker als Einheit ausgebildet sind. Die Steckervorrichtung umfasst eine Steckerleiste 20, an der konisch geformte Teilelemente 26 angeordnet sind. Mit der Steckerleiste sind Schläuche 21 verbunden.

Fig. 9b zeigt ein der Steckervorrichtung aus Fig. 9a entsprechende Mikrofluidsystem mit einer Anschlußvorrichtung 22, die mehrere Anschlufseinrichtungen und damit verbundene durchströmbare Volumina umfasst.

In Fig. 9c ist ein Querschnitt durch eine Steckervorrichtung 24 mit Schläuchen 25 und eine Anschlußvorrichtung 23 gezeigt. Die Anschlußvorrichtung 23 kann mit der Steckervorrichtung 24 über entsprechende Widerhaken fest verbunden werden.

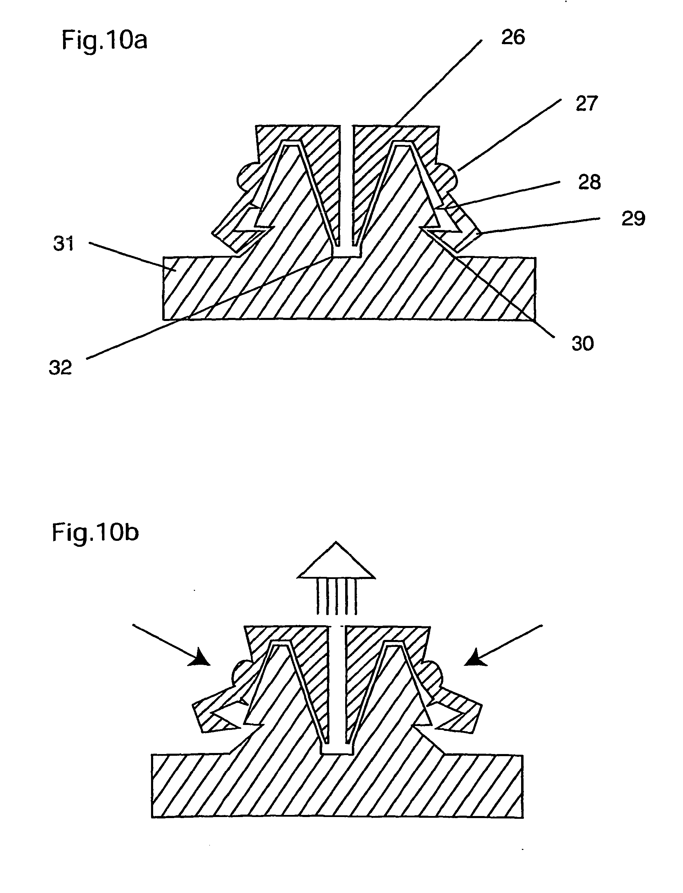

Fig. 10a zeigt ein Ausführungsbeispiel eines Widerhakensystems als Querschnittszeichnung. In die Steckereinrichtung 26 ist eine zusätzliche Ausbuchtung 27 sowie ein Abstandhalter 28 angebracht. Über den Widerhaken 29 ist die Steckereinrichtung über die Aussparung 30 fest mit dem Mikrofluidsystem 31 verbunden, so dass das Volumen 32 einfach befüllt werden kann. Durch das Zusammenpressen der Ausbuchtungen 27 (siehe Fig. 10b) wird aufgrund des Abstandhalters 28 ein Drehmoment erzeugt, welches die Widerhaken 29 auseinanderbewegt und damit die Steckereinrichtung von der Anschlußeinrichtung löst.

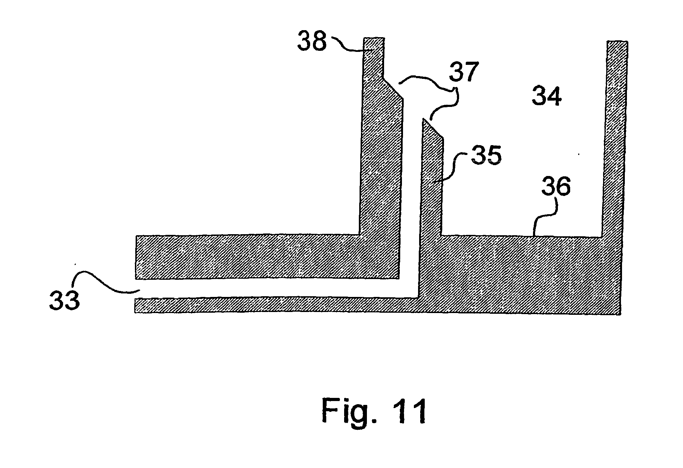

In Fig. 11 ist ein Mikrofluidsystem mit einem durchströmbaren Volumen 33 zu sehen, das in ein Flüssigkeitsreservoir 34 mündet. Innerhalb des Reservoirs 34 ist ein auf der Grundfläche 36 stehender Hohlzylinder ausgebildet. Das durchströmbare Volumen 33 wird durch die Grundfläche 36 durch den Hohlzylinder 35 geführt. Der Hohlzylinder 35 ist direkt entlang einer Seitenwand 38 angeordnet und geht in diese über. Die Oberfläche 37 des Zylinders 35 ist mündungsseitig abgeschrägt.

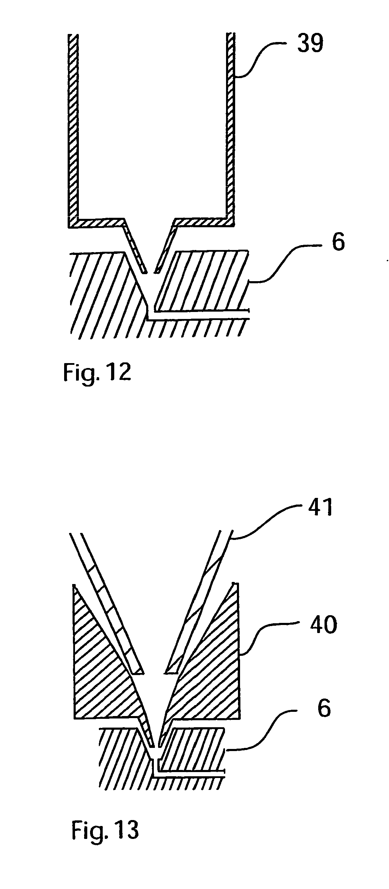

Fig. 12 zeigt ein Beispiel einer Steckereinrichtung 39, die ein Flüssigkeitsreservoir umfasst. Die Anschlußeinrichtung ist zur Aufnahme eines Luer-Lock-Elements ausgebildet.

Fig. 13 zeigt ein Beispiel einer Steckereinrichtung 40, die ein Durchgangsloch zur Aufnahme einer Pipetten- oder Spritzenspitze 41 aufweist. In diesem Fall übernimmt also die Steckereinrichtung die Funktion eines Adapters.

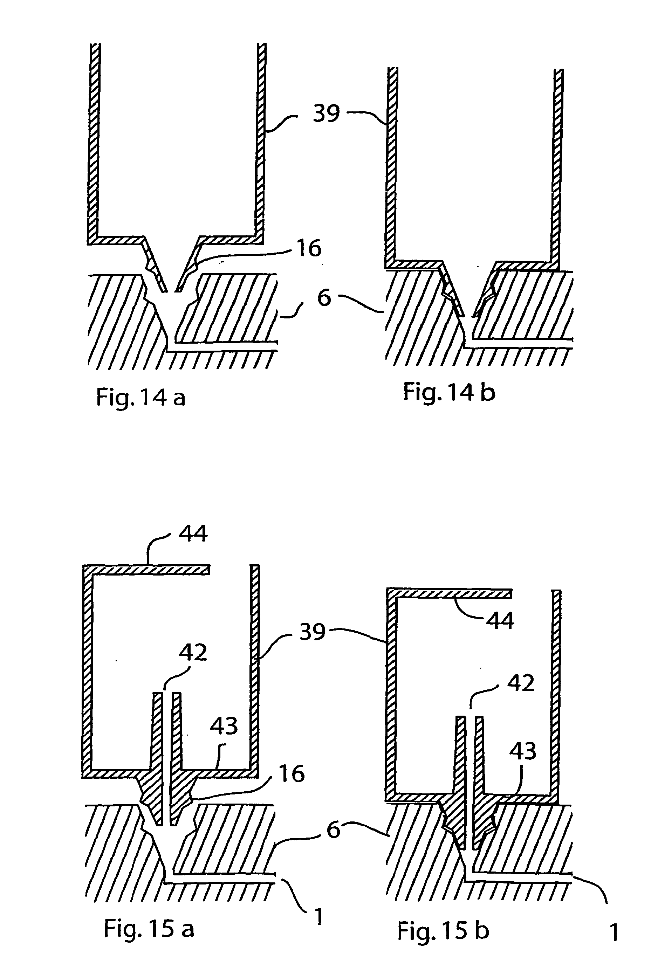

In Fig. 14a ist ein Mikrofluidsystem 6 und eine Steckereinrichtung 39 mit einem Flüssigkeitsreservoir zu sehen, wobei die Steckereinrichtung 39 Einrastelemente 16 aufweist. Fig. 14b zeigt die Steckereinrichtung in aufgestecktem Zustand.

Ein weiteres Beispiel eines Mikrofluidsystems 6 und einer Steckereinrichtung 39 mit einem Flüssigkeitsreservoir ist in Fig. 15a und 15b gezeigt. in diesem Beispiel mündet das Durchgangsloch 42 oberhalb der Grundfläche 43 in das Flüssigkeitsreservoir. Somit kann ein Rückfließen der in dem Flüssigkeitsreservoir befindlichen Flüssigkeit in das durchströmbare Volumen 1 verhindert werden. Die Flüssigkeit kann damit von dem Mikrofluidsystem entfernt und anschließend weiterverwendet oder entsorgt werden. Das Flüssigkeitsreservoir kann wenigstens teilweise mit einem Deckel 44 abgedeckt sein.

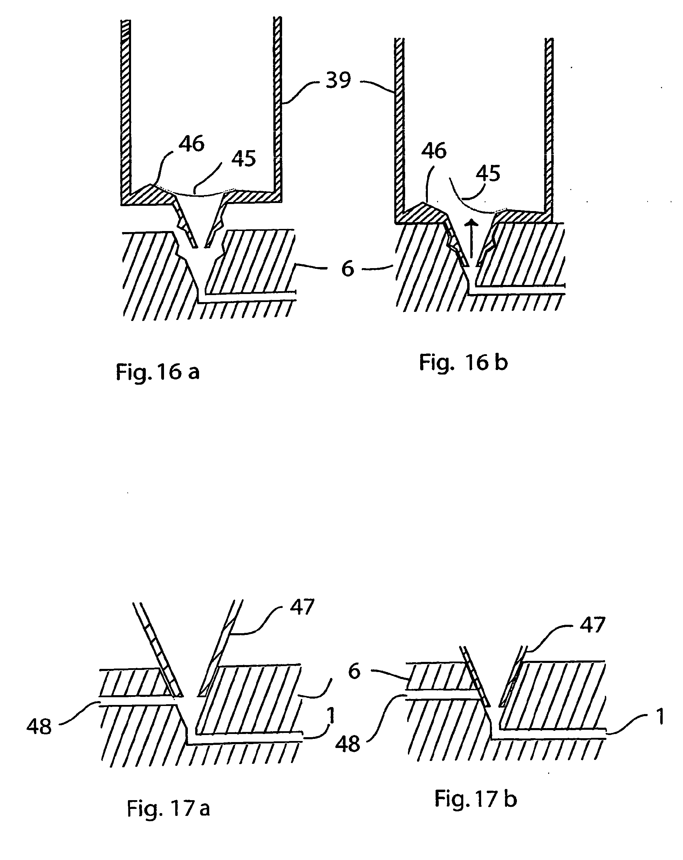

Fig. 16a und 16b zeigt ein Mikrofluidsystem 6 und eine Steckereinrichtung 39, bei der das Durchgangsloch ein Verschlußelement 45 in Form einer Folie aufweist. Die Folie ist an einer Stelle (hier rechts des Durchgangslochs) fixiert und weist eine Krümmung auf, aufgrund derer sie durch eine Federspannung das Durchgangsloch verschließt. Ansonsten liegt die Folie um das Durchgangsloch auf, vorzugsweise in einem abgeschrägten Bereich 46, um durch eine größere Auflagefläche einen optimalen Verschluß zu gewährleisten. Wird die Folie von unten durch das Durchgangsloch mit Druck beaufschlagt (durch eine Flüssigkeit oder Gas), wie es in Fig. 16b mit dem Pfeil angedeutet ist, wirkt eine Kraft gegen die Federkraft, so dass das Durchgangsloch geöffnet wird.

Fig. 17a und 17b zeigt ein Mikrofluidsystem mit einem durchströmbaren Volumen 48, das oberhalb des ersten durchströmbaren Volumens 1 in die Anschlußeinrichtung mündet. Wenn eine Steckereinrichtung 47 in die Anschlußeinrichtung gesteckt wird, verschließt sie somit das durchströmbare Volumen 48; eine Flüssigkeit oder ein Gas kann dann nur in das Volumen 1 gelangen.

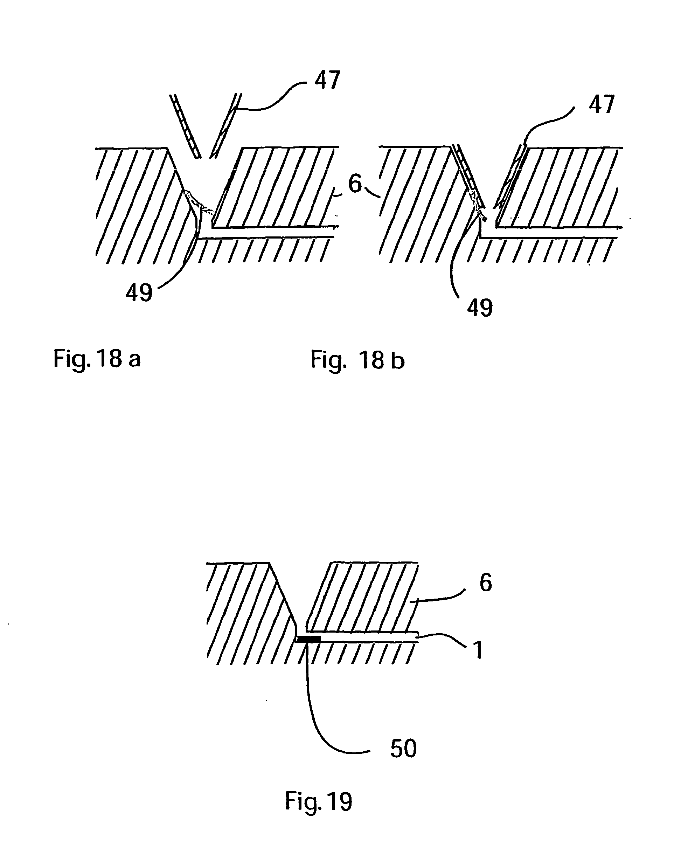

In Fig. 18a und 18b ist in der Anschlußeinrichtung ein Verschlußelement 49 in Form einer gekrümmten Folie angeordnet, die aufgrund ihrer Federspannung die Anschlu-ßeinrichtung verschließt. Eine in die Anschlußeinrichtung gesteckte Steckereinrichtung drückt die Feder zur Seite (Fig. 18b), so dass die Anschlußeinrichtung geöffnet wird.

Fig. 19 zeigt ein Mikrofluidsystem mit einem beschichteten Bereich 50, durch den die innere Oberfläche des durchströmbaren Volumens 1 unterhalb der Anschlußeinrichtung hydrophobisiert wird.

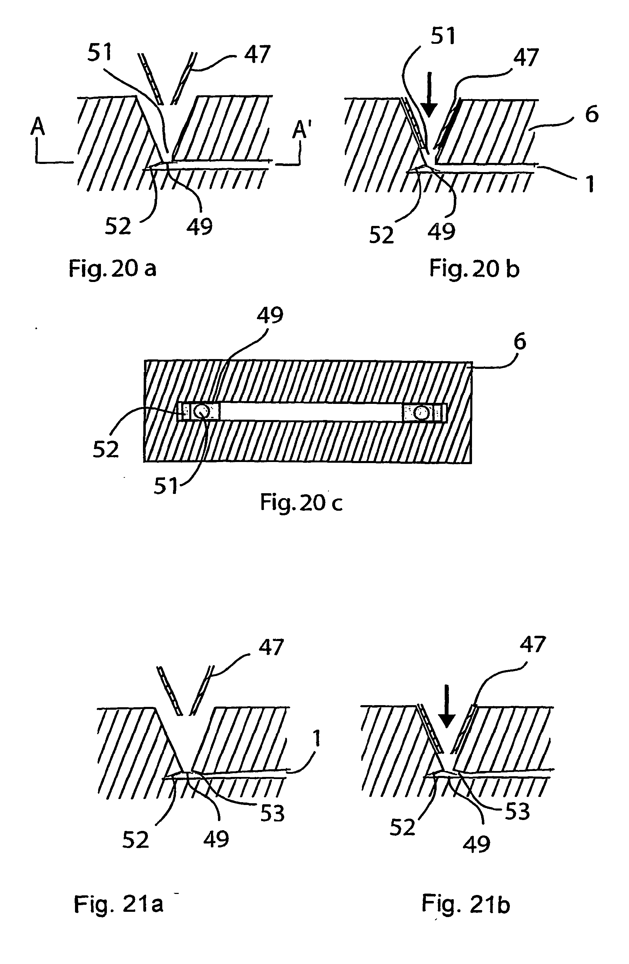

In Fig. 20a ist ein Mikrofluidsystem 6 mit einem Verschlußelement 49 in Form einer Folie zu sehen, die die Mündung 51 des durchströmbaren Volumens 1 in die Anschlußeinrichtung durch Federkraft verschließt. Die Folie ist im Bereich 52 an der inneren Oberfläche des Volumens 1 fixiert. Wird die Folie mit Druck beaufschlagt (durch den Pfeil in Fig. 20b angezeigt), so wird die Folie nach unten gedrückt und gibt die Mündung 51 frei. In Fig. 20c ist ein Querschnitt längs der Achse A-A' gezeigt.

Fig. 21a und 21b zeigt eine Variante des Mikrofluidsystems von Fig. 19a und 19b, bei der die innere Oberfläche des durchströmbaren Volumens 1 in einem Bereich 53 der Mündung 51 angeschrägt ist, um somit durch eine größere Auflagefläche der Folie 49 einen optimalen Verschluß zu ermöglichen.

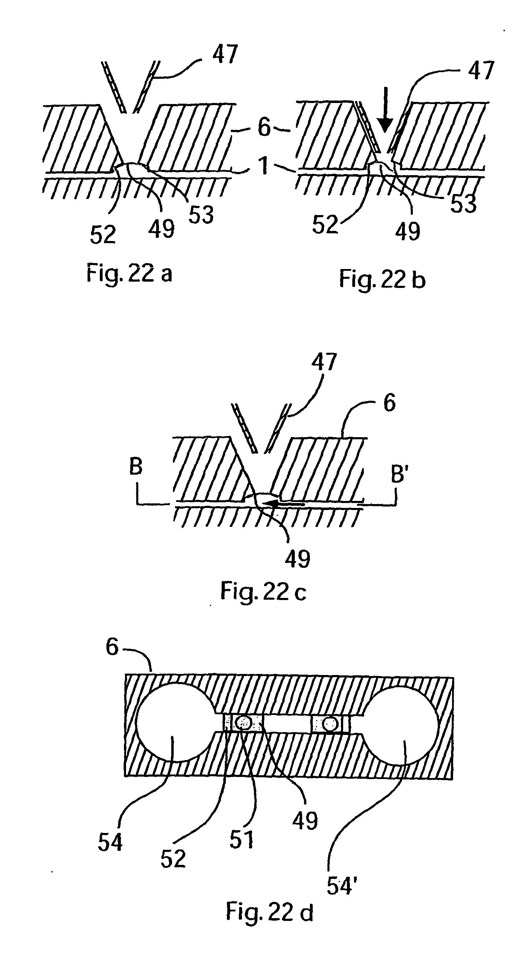

In Fig. 22a bis 22d ist ein Mikrofluidsystem 6 mit einem durchströmbaren Volumen 1 dargestellt, das zwei Reservoire 54 und 54' verbindet. In den Kanal münden zwei Anschlußeinrichtungen, die durch Folien 49 und 49' verschlossen sind. Fig. 22c ist ein Querschnitt längs der Achse B-B'. Wird eine Folie mit Druck beaufschlagt (Fig. 22b), so öffnet sie die Mündung 51, wobei aber nur eine Seite des Volumens 1 zugänglich wird. Nach Entfernen der Steckereinrichtung 47 wird die Mündung wieder geschlossen und die Verbindung über das Volumen 1 zu dem anderen Reservoir freigegeben.

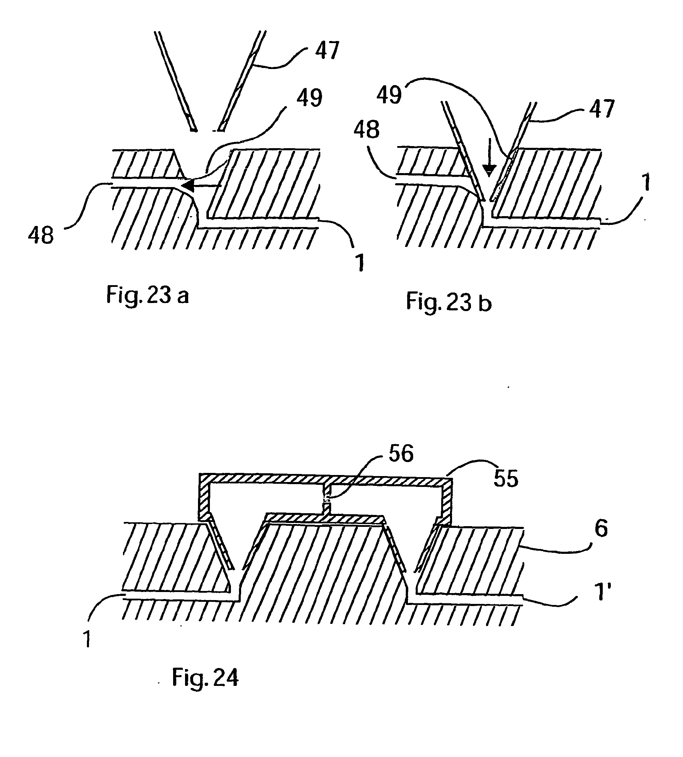

Fig. 23a und 23b zeigt eine Kombination der Beispiele der Figuren 17 und 18. Ohne Steckereinrichtung 47 wird die Anschlußeinrichtung durch eine Folie 49 verschlossen, während die Kanäle 1 und 48 in Verbindung stehen. Falls eine Steckereinrichtung 47 in die Anschlußeinrichtung gesteckt wird, wird dadurch der Kanal 48 geschlossen und die Folie 49 zur Seite gedrückt.

In Fig. 24 ist ein Mikrofluidsystem 6 mit einer Steckervorrichtung 55 dargestellt, die zwei Flüssigkeitsreservoire umfasst, die wiederum über ein Durchgangsloch 56 mit Mikrofilter verbunden sind.

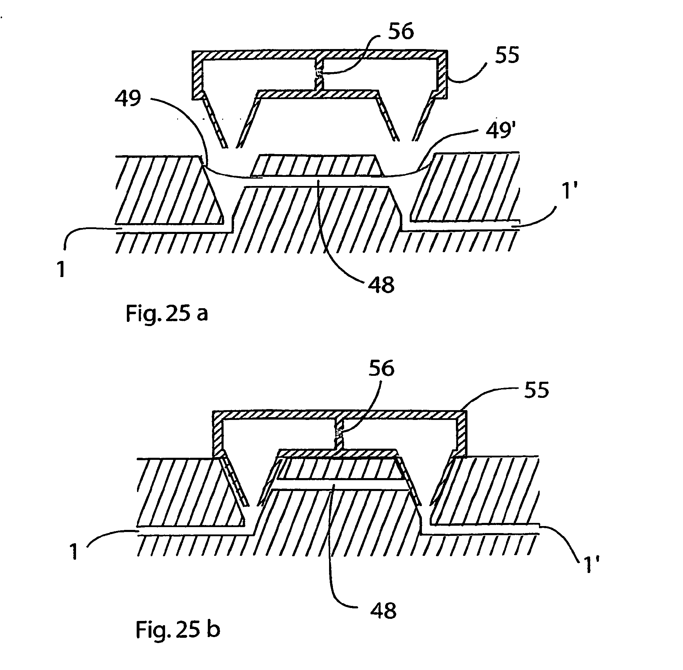

In Fig. 25a ist ein Mikrofluidsystem mit zwei Anschlußeinrichtungen und einem zugehörigen Steckervorrichtung zu sehen. Die Anschlußeinrichtungen sind über einen Kanal 48 miteinander verbunden und über Folien 49 und 49' nach außen verschlossen. Wenn die Steckervorrichtung 55 aufgesteckt wird (Fig. 25b), sind die Kanäle 1 und 1 nur noch über das Durchgangsloch 56 zwischen den Flüssigkeitsreservoiren miteinander verbunden. Durch einen in dem Durchgangsloch 56 angeordneten Mikrofilter kann somit die Flüssigkeit gefiltert werden. Alternativ können die Flüssigkeitsreservoiren beispielsweise auch als Reaktionsbereiche dienen, die nach durchgeführter Reaktion wieder von dem Mikrofluidsystem entfernt werden.

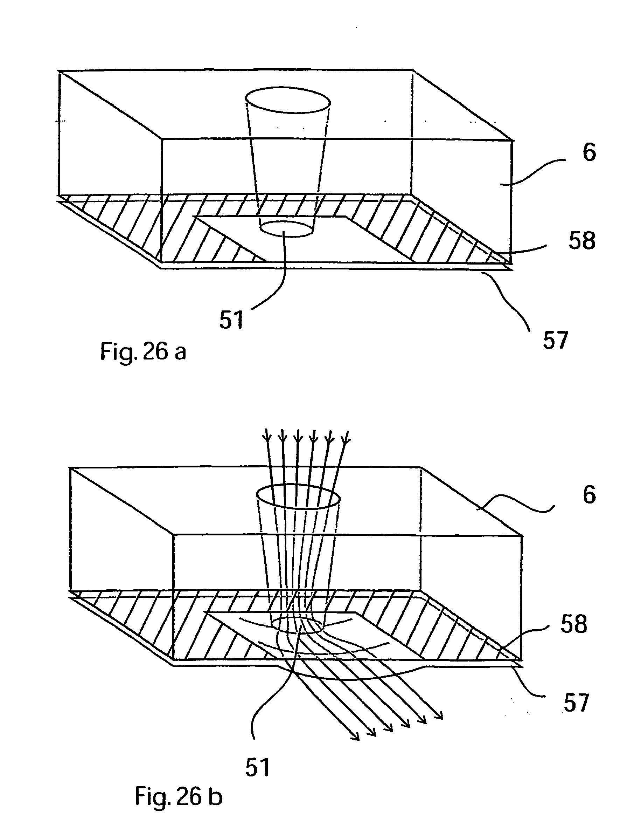

Fig. 26a zeigt eine Explosionsansicht eines Teils eines Mikrofluidsystems 6 mit einem Verschlußelement 57 in Form einer elastischen Membran oder Folie 57, die direkt auf der inneren Oberfläche 58 eines durchströmbaren Volumens angeordnet ist und die Mündung 51 der Anschlußeinrichtung verschließt Bei Beaufschlagung mit Druck (in Fig. 26b durch Pfeile angedeutet), dehnt sich die Membran 57 und gibt die Öffnung 51 frei.

Es versteht sich, daß die in den zuvor beschriebenen Beispielen genannten Merkmale nicht auf diese speziellen Kombinationen beschränkt sind und auch in anderen Kombinationen möglich sind.

## Patentansprüche

1. Mikrofluidsystem (6) mit mindestens einem durchströmbaren Volumen (1) und mindestens einer mit dem Volumen verbundenen Anschlusseinrichtung, wobei das Mikrofluidsystem eine strukturierte Oberfläche mit mindestens einer Erhöhung (19) aufweist, wobei jede Anschlusseinrichtung in einer der mindestens einen Erhöhung (19) und in Form einer sich konisch verjüngenden Vertiefung (2) ausgebildet ist
**dadurch gekennzeichnet, dass**
die mindestens eine Erhöhung in Form einer sich konisch verjüngenden Erhöhung ausgebildet ist.

2. Mikrofluidsystem nach Anspruch 1, in welchem die Anschlußeinrichtung einen Absatz (5) aufweist.

3. Mikrofluidsystem nach einem der vorangegangenen Ansprüche, in welchem die Anschlußeinrichtung eine Aussparung (17) zur Aufnahme eines Einrastelements (16) aufweist.

4. Mikrofluidsystem nach einem der vorangegangenen Ansprüche, in welchem an der Anschlußeinrichtung ein Verschlußelement (49) zum Verschließen der Anschlußeinrichtung angeordnet ist.

5. Mikrofluidsystem nach einem der vorangegangenen Ansprüche, in welchem mindestens ein weiteres durchströmbares Volumen (48) ausgebildet ist, welches oberhalb des mindestens einen durchströmbaren Volumens in die Anschlußeinrichtung mündet.

6. Mikrofluidsystem nach einem der vorangegangenen Ansprüche, wobei die wenigstens eine Anschlusseinrichtung ein optisch transparentes Material umfasst.

7. Mikrofluidsystem nach einem der vorangegangenen Ansprüche, in welchem jedes durchströmbare Volumen in ein Flüssigkeitsreservoir (34) mündet und die Mündung jedes Volumens oberhalb der Grundfläche (36) des entsprechenden Flüssigkeitsreservoirs angeordnet ist.

8. Mikrofluidsystem nach Anspruch 7, in welchem jedes Flüssigkeitsreservoir auf der Oberfläche des Mikrofluidsystems angeordnet ist.

9. Mikrofluidsystem nach Anspruch 8, in welchem jedes durchströmbare Volumen durch einen Hohlzylinder (35) geführt wird, der innerhalb des entsprechenden Flüssigkeitsreservoirs auf der Grundfläche des Flüssigkeitsreservoirs stehend ausgebildet ist.

10. Mikrofluidsystem nach Anspruch 9, in welchem jeder Hohlzylinder mündungsseitig eine abgeschrägte Oberfläche aufweist.

11. Steckereinrichtung zur Verwendung in einem Mikrofluidsystem gemäß einem der Ansprüche 1 - 10, wobei die Steckereinrichtung mit der Anschlusseinrichtung in Eingriff bringbar ist und ein sich in Steckrichtung konisch verjüngendes und ein sich gegen die Steckrichtung konisch verjüngendes Teilelement aufweist.

12. Steckereinrichtung nach Anspruch 11, welche mindestens ein Einrastelement (16) in Form einer Ausbuchtung umfasst.

13. Steckereinrichtung nach einem der Ansprüche 11 oder 12, welche derart ausgebildet ist, dass sie an einem Teil der die Anschlußeinrichtung umgebenden Oberfläche des Mikrofluidsystems flächig anliegt.

14. Steckereinrichtung nach einem der Ansprüche 11 - 13, welche mindestens ein Durchgangsloch (42) umfasst.

15. Steckereinrichtung nach Anspruch 14, wobei jedes Durchgangsloch mit einer Zuführeinrichtung (4), insbesondere einem Schlauch, verbunden ist.

16. Steckereinrichtung nach einem der Ansprüche 11 - 15, welche ein Verschlusselement (45) aufweist.

17. Steckereinrichtung nach einem der Ansprüche 11 - 16, welche .elektronische Komponenten, Flüssigkeitsreservoire und/oder Gasreservoire umfasst.

18. Steckervorrichtung aus mindestens zwei Steckereinrichtungen gemäß einem der Ansprüche 11 -17, wobei die Steckereinrichtungen als Einheit ausgebildet sind.

19. Steckereinrichtung nach einem der Ansprüche 11 - 18, wobei die Steckereinnchtung ein optisch transparentes Material umfasst.

## Claims

1. A microfluid system (6) comprising at least one flow-through volume (1) and at least one connection means connected to the volume, the microfluid system comprising a structured surface with at least one elevation (19), each connection means being configured in one of the at least one elevation (19) and in the form of a conically tapered recess (2),
**characterized in that**
the at least one elevation is configured in the form of a conically tapered elevation.

2. The microfluid system according to claim 1, wherein the connection means comprises a shoulder (5).

3. The microfluid system according to any one of the preceding claims, wherein the connection means comprises a recess (17) for receiving a snap-in element (18).

4. The microfluid system according to any one of the preceding claims, wherein the connection means has arranged thereon a closing element (49) for closing the connection means.

5. The microfluid system according to any one of the preceding claims, wherein at least one further flow-through volume (48) is formed that opens above the at least one flow-through volume into the connection means.

6. The microfluid system according to any one of the preceding claims, wherein the at least one connection means comprises an optically transparent material.

7. The microfluid system according to any one of the preceding claims, wherein each flow-through volume opens into a liquid reservoir (34) and the opening of each volume is arranged above the base surface (36) of the corresponding liquid reservoir.

8. The microfluid system according to claim 7, wherein each liquid reservoir is arranged on the surface of the microfluid system.

9. The microfluid system according to claim 8, wherein each flow-through volume is guided through a hollow cylinder (35) which is configured inside the corresponding liquid reservoir to stand on the base surface of the liquid reservoir.

10. The microfluid system according to claim 9, wherein each hollow cylinder is provided at the opening side with a beveled surface.

11. A plug means for use in a microfluid system according to any one of claims 1 to 10, wherein the plug means is adapted to be brought into engagement with the connection means and comprises a partial element conically tapered in insertion direction and a partial element conically tapered in a direction opposite the insertion direction.

12. The plug means according to claim 11, which comprises at least one snap-in element (16) in the form of a bulge.

13. The plug means according to any one of claims 11 or 12, which is designed such that it rests in planar fashion on part of the microfluid system surface which surrounds the connection means.

14. The plug means according to any one of claims 11 to 13, which comprises at least one through hole (42).

15. The plug means according to claim 14, wherein each through hole is connected to a feed means (4), especially a flexible tube.

16. The plug means according to any one of claims 11 to 15, which comprises a closing element (45).

17. The plug means according to any one of claims 11 to 16, which comprises electronic components, liquid reservoirs and/or gas reservoirs.

18. A plug device consisting of at least two plug means according to any one of claims 11 to 17, wherein the plug means are configured as one unit.

19. The plug means according to any one of claims 11 to 18, wherein the plug means comprises an optically transparent material.

## Revendications

1. Système microfluidique (6) comprenant au moins un volume (1) apte à être traversé par un écoulement et au moins un dispositif de raccordement relié à ce volume, le système microfluidique présentant une surface structurée avec au moins une partie relevée (19) et chaque dispositif de raccordement étant formé dans la ou les parties relevées (19) et étant conçu comme un creux (2) effilé en cône,
**caractérisé en ce que** la ou les parties relevées sont conçues comme des parties relevées effilées en cône.

2. Système microfluidique selon la revendication 1, dans lequel le dispositif de raccordement présente un épaulement (5).

3. Système microfluidique selon l'une des revendications précédentes, dans lequel le dispositif de raccordement présente un évidement (17) pour recevoir un élément d'encliquetage (18).

4. Système microfluidique selon l'une des revendications précédentes, dans lequel il est prévu sur le dispositif de raccordement un élément de fermeture (49) destiné à fermer celui-ci.

5. Système microfluidique selon l'une des revendications précédentes, dans lequel il est prévu au moins un autre volume (48) apte à être traversé par un écoulement, qui débouche dans le dispositif de raccordement au-dessus du ou des volumes aptes à être traversés par un écoulement.

6. Système microfluidique selon l'une des revendications précédentes, dans lequel le ou les dispositifs de raccordement comportent une matière optiquement transparente.

7. Système microfluidique selon l'une des revendications précédentes, dans lequel chaque volume apte à être traversé par un écoulement débouche dans un réservoir de liquide (34), et ce au-dessus de la surface du fond (36) du réservoir de liquide correspondant.

8. Système microfluidique selon la revendication 7, dans lequel chaque réservoir de liquide est disposé sur la surface du système microfluidique.

9. Système microfluidique selon la revendication 8, dans lequel chaque volume apte à être traversé par un écoulement passe à travers un cylindre creux (35) qui est formé à la verticale à l'intérieur du réservoir de liquide correspondant, sur la surface du fond de celui-ci.

10. Système microfluidique selon la revendication 9, dans lequel chaque cylindre creux, sur le côté où il débouche, présente une surface biseautée.

11. Dispositif d'emboîtement à utiliser dans un système microfluidique selon l'une des revendications 1 à 10, lequel dispositif d'emboîtement est apte à être mis en contact avec le dispositif de raccordement et présente une partie qui a une forme effilée en cône dans le sens de l'emboîtement et une partie qui a une forme effilée en cône dans le sens opposé au sens d'emboîtement.

12. Dispositif d'emboîtement selon la revendication 11, qui comprend au moins un élément d'enclenchement (16) en forme de saillie.

13. Dispositif d'emboîtement selon la revendication 11 ou 12, qui est conçu de telle sorte qu'il est appliqué à plat contre une partie de la surface du système microfluidique qui entoure le dispositif de raccordement.

14. Dispositif d'emboîtement selon l'une des revendications 11 à 13, qui présente au moins un trou de passage (42).

15. Dispositif d'emboîtement selon la revendication 14, dans lequel chaque trou de passage est relié à un dispositif d'amenée (4), en particulier un tuyau.

16. Dispositif d'emboîtement selon l'une des revendications 11 à 15, qui comporte un élément de fermeture (45).

17. Dispositif d'emboîtement selon l'une des revendications 11 à 16, qui comprend des composants électroniques, des réservoirs de liquide et/ou des réservoirs de gaz.

18. Mécanisme d'emboîtement composé d'au moins deux dispositifs d'emboîtement selon l'une des revendications 11 à 17, les dispositifs d'emboîtement étant conçus comme une unité.

19. Dispositif d'emboîtement selon l'une des revendications 11 à 18, qui comporte une matière optiquement transparente.
